(19) Europäisches Patentamt
European Patent Office
Office européen des brevets

(11) Publication number: **0 044 073**
**B1**

(12) **EUROPEAN PATENT SPECIFICATION**

(45) Date of publication of patent specification: **27.12.84**

(51) Int. Cl.$^3$: **H 04 N 5/91,** G 11 B 7/00

(21) Application number: **81105481.6**

(22) Date of filing: **13.07.81**

(54) **System for recording digital information in a pulse-length modulation format.**

(30) Priority: **16.07.80 US 169238**

(43) Date of publication of application:
**20.01.82 Bulletin 82/03**

(45) Publication of the grant of the patent:
**27.12.84 Bulletin 84/52**

(84) Designated Contracting States:
**AT BE CH DE FR GB IT LI LU NL SE**

(56) References cited:
**AT-B- 346 921**
**DE-A-2 343 017**
**US-A-4 094 013**

(73) Proprietor: **DISCOVISION ASSOCIATES**
**P.O. Box 6600 3300 Hyland Avenue**
**Costa Mesa California 92626 (US)**

(72) Inventor: **Bailey, Jack H.**
**17862 Helena Circle**
**Villa Park California 92667 (US)**

(74) Representative: **Fleuchaus, Leo, Dipl.-Ing. et al**
**Fleuchaus & Wehser Melchiorstrasse 42**
**D-8000 München 71 (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**EP 0 044 073 B1**

## Description

This invention relates generally to systems for storing digital information, and, more particularly, to video disc systems for storing digital information in a pulse-length modulation format.

Video disc systems are becoming widely used for storing digital information with a high recording efficiency. The information is ordinarily recorded on the disc as a succession of spaced marks arranged in a plurality of substantially circular and concentric recording tracks, for example, a spiral pattern. One particularly efficient system has recorded the digital information in a pulse-length modulation format, in which each of the successive spaced marks has a discretely-variable length representative of a separate, multi-bit code block. The spacing between successive marks, or alternatively the spacing between the beginning edges of successive marks, is ordinarily maintained constant.

The combination of modulated length of marks and spaces on a video disc system is known from document DE—A—2 343 017. However, in this known system binary coding of the signal is not employed and no relationship exists between the recording format of marks and spaces, and the bit count of data blocks into which the binary signal is coded. Moreover, the lengths of marks and spaces in the known system are not varied in discrete steps.

The video disc can include a glass substrate, with a thin, metallic recording layer overlaying it, and apparatus for recording the digital information on the disc ordinarily focuses a writing beam of light onto the disc, as the disc is rotated at a uniform rate, with the intensity of the beam being modulated in accordance with the digital information to be recorded. When the intensity exceeds a predetermined threshold, a non-reflective pit or mark is formed in the recording layer, whereas when the intensity does not exceed the threshold, the recording layer is not affected. Thus, the lengths of the successive, spaced marks correspond to the time duration the intensity of the focused beam exceeds this threshold.

The recorded digital information is recovered from replicas of the recorded video disc by scanning it with a reading beam of light having a uniform intensity, to produce a reflected beam having an intensity modulated by the recorded pattern of spaced marks. The length of time the intensity of the reflected beam exceeds a predetermined level is then measured to determine the length of the corresponding mark and thus the particular binary code block it represents.

Although this prior pulse-length modulation technique has proven effective in recording digital information with a relatively high recording efficiency, there is still a need for a system for recording digital information with an even higher efficiency. The present invention fulfills this need.

The present invention is embodied in a system for recording and playing back digital information on a record medium, in which the information is stored in a succession of spaced marks of discretely-variable lengths. The length of each mark is representative of a separate one of a succession of multi-bit binary code blocks. In accordance with the invention, the spaces between successive marks also have discretely-variable lengths representative of separate blocks in the succession of code blocks. Digital information is thereby recorded on the record medium with a yet higher recording efficiency.

More particularly, the present invention has particular utility in a video disc system in which a video signal is recorded on a disc-shaped record in a succession of substantially circular and concentric recording tracks. The recording apparatus functions initially to digitize the video signal and to compress the digitized signal, using known data compression techniques. The digitized signal is then arranged in a succession of code blocks of the same or mixed lengths, and a binary modulation signal is formed having transitions in state determined in accordance with the successive code blocks. Each code block includes four binary bits, and the successive states of the modulation signal have sixteen possible discrete durations.

The modulation signal is coupled to a light intensity modulator, which modulates the intensity of a writing beam such that the intensity is alternately greater than and less than a predetermined threshold for time durations corresponding to the succession of multi-bit code blocks. The intensity-modulated beam is focused onto the record, as the record is rotated at a prescribed rate, to form corresponding microscopic pits or marks in a prescribed pattern. Using conventional techniques, the record can then be used to produce video disc replicas.

The recorded digital information is played back from disc replicas by scanning the successive tracks with a reading beam of light having a substantially uniform intensity. This produces a reflected (or transmitted) beam having an intensity modulated by the recorded pattern of alternating marks and spaces. The playback apparatus measures the time durations of the successive marks and spaces and determines the particular code blocks each represents. After de-compressing the succession of detected code blocks, the original analog video signal can be re-created.

Each of the successive recording tracks is used to record a separate video frame. Since the special pulse-length modulation format results in a recorded pattern of marks and spaces having a variable length, however, it is usually the case that less than an entire track is required to record each video frame. When this occurs, the remainder of the track is occupied by alternating marks and spaces representative of a prescribed filler code.

Other aspects and advantages of the present invention will become apparent from the following description, taken in conjunction with the accompanying drawings, which disclose, by way of example, the principles of the invention.

The accompanying drawings illustrate the invention. In such drawings:

FIG. 1 is a simplified block diagram of recording apparatus in accordance with the present invention, for recording a digitized video signal on a video disc, in a special pulse-length modulation format;

FIG. 2 is a simplified block diagram of playback apparatus in accordance with the present invention, for recovering the digitized video signal stored on the video disc in the special pulse-length modulation format;

FIG. 3 is a schematic diagram illustrating the format of the data on the video disc; and

FIG. 4 is a table showing the prescribed lengths for the successive marks (and spaces) corresponding to each of the plurality of possible 4-bit code blocks being recorded.

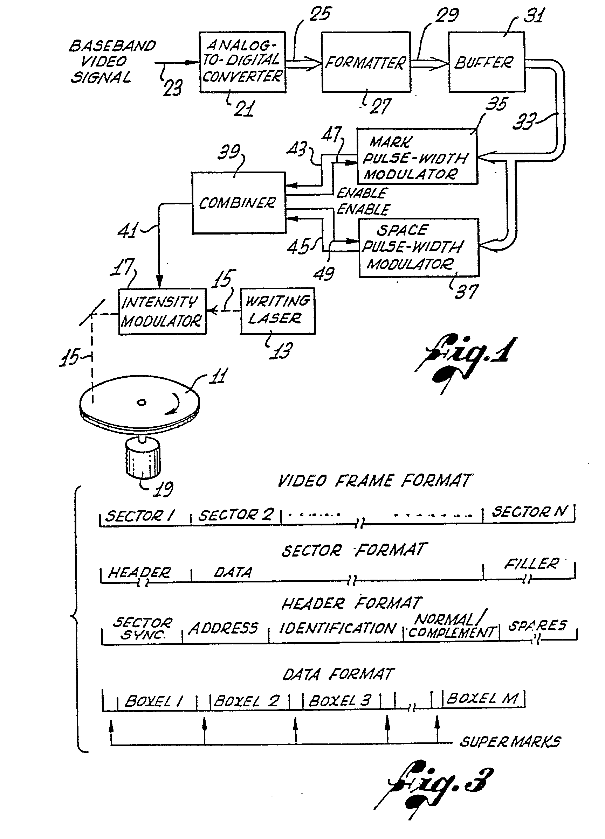

Referring now to the drawings, and particularly to FIG. 1, there is shown recording apparatus for recording a digitized video signal on a disc-shaped record 11. The apparatus includes a writing laser 13 for producing a writing beam of light 15 having a substantially uniform intensity, and an intensity modulator 17 for modulating the intensity of the beam in accordance with a digital modulation signal to be recorded. The apparatus further includes a radially-movably objective lens (not shown) for focusing the intensity-modulated beam onto the record, and a spindle motor 19 for rotating the record at a prescribed, uniform rate (e.g., 1800 r.p.m.). The focused beam thereby forms a succession of substantially circular and concentric recording tracks in the record.

The record 11 includes a glass substrate with a metallic recording layer overlaying it, and the focused beam forms a microscopic pit in the recording layer whenever its intensity exceeds a predetermined threshold. The intensity is modulated to be alternately greater and less than this threshold, in accordance with the digital modulation signal to be recorded, so that a corresponding succession of spaced pits or marks is formed in the record.

In accordance with the invention, the digitized video signal is recorded in the record 11 in a special pulse-length modulation format, in which both the successive marks and the spaces between successive marks have discretely-variable lengths representative of a succession of multi-bit binary code blocks. Digital information is thereby recorded on the record with an improved recording efficiency.

More particularly, the recording apparatus of FIG. 1 includes an analog-to-digital converter 21, for sampling a baseband video signal input on line 23 and converting it to a corresponding digital signal. This digital signal is coupled over lines 25 to a formatter 27, for removal of vertical and horizontal sync signals, compression of the digital information, and formatting of the compressed data into successive four-bit code blocks. These successive code blocks are transferred over lines 29 to a suitable storage buffer 31, which outputs the blocks, one by one over lines 33, to a MARK pulse-width modulator 35 and a SPACE pulse-width modulator 37. The two pulse-width modulators operate, in an alternating fashion, to produce output pulses having discretely-variable time durations corresponding to the particular code blocks applied to their respective input terminals. The buffer 31 must have sufficient storage capacity to store a predetermined number of 4-bit code blocks, since the blocks are input at a substantially uniform rate but are output at a variable rate determined by the particular information the code blocks contain.

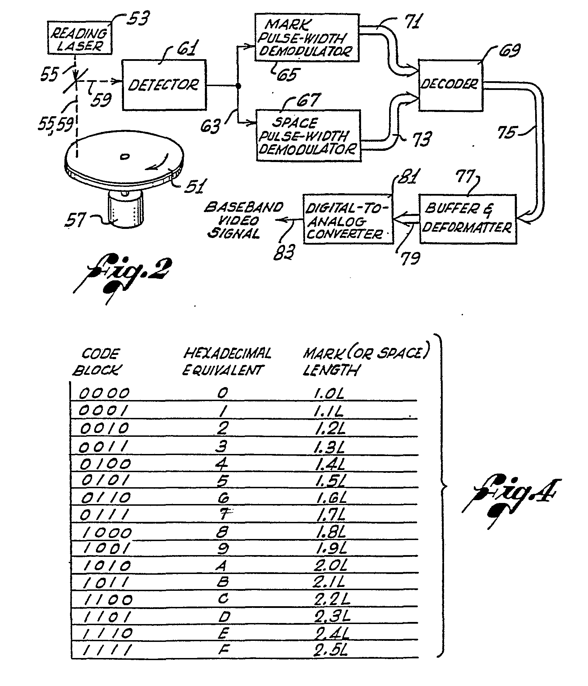

FIG. 4 is a table showing one suitable relationship between the sixteen possible 4-bit code blocks and the time durations for the corresponding pulses output by the two pulse-width modulators 35 and 37. It will be observed that the possible pulse lengths vary in uniform steps between a minimum length of 1.0L and a maximum length of 2.5L.

The recording apparatus of FIG. 1 further includes a combiner device 39 for producing the modulation signal coupled over line 41 to the intensity modulator 17, in accordance with the successive pulse-length modulated pulses received over lines 43 and 45 from the MARK and SPACE modulators 35 and 37, respectively. The combiner also controls the timing of the MARK and SPACE modulators by providing ENABLE signals over lines 47 and 49, respectively, initiating operation of each modulator immediately after the previous output pulse from the other modulator has terminated. The modulation signal output by the combiner on line 41 is in a logical "one" state whenever the MARK modulator 35 outputs a pulse, and in the logical "zero" state whenever the SPACE modulator 37 outputs a pulse. The desired pattern of alternating marks and spaces, representative of the successive four-bit code blocks, is thereby formed in the record 11.

In one embodiment, each of the successive recording tracks in the record 11 records the digital information for a single video frame. As shown in FIG. 3, each track includes N sectors, and each sector includes a header portion, a data portion, and a filler portion of variable length. A fixed amount of data is included in each data portion, but since each mark and space are variable in length, the length of the entire data portion is likewise variable. The filler portion is therefore usually necessary. In one embodiment, the filler code comprises a special sequence of marks and spaces that can be used in calibrating apparatus for playing back the recorded information. Both the header and filler portions of each sector are generated by the formatter 27 (FIG. 1), which includes registers for storing data representative of the current frame and sector number and of the particular location in the sector currently being recorded.

FIG. 3 depicts the header portion of each sector to include a synchronizing code, a sector address code, an identification code indicating the character of the data (e.g., video, audio, etc.), a normal/complement code, and spares for permitting expansion of any of the previous codes. The normal/complement code is used as a special means for minimizing the length of the data in each sector. As previously mentioned, each sector includes a fixed amount of data, but is variable in length, in accordance with the particular code blocks being recorded. If it is determined by the formatter 27 (FIG. 1) that the required track length to record a particular sector of data exceeds a predetermined average value, then the formatter outputs the complement of each code block for recording instead, and modifies the normal/complement code in the corresponding header, accordingly. In this manner, the maximum track length required to store the data in any sector corresponds to the recording of marks and spaces that are all of average length, i.e., that correspond to the code blocks "0111" or "1000".

FIG. 3 also depicts the format of the data portion of each sector. It will be observed that the data includes M successive boxels, each preceded by a special supermark code, for synchronization and re-initialization. In one embodiment, each boxel corresponds to an 8 × 8 matrix derived from a segment of the video frame.

FIG. 2 depicts apparatus for playing back a video disc replica 51 of the recorded record 11 of FIG. 1. The apparatus includes a reading laser 53 for producing a reading beam of light 55 having a substantially uniform intensity. This beam is focused onto the disc 51 by a radially-movable lens (not shown) as the disc is rotated at a uniform rate by a spindle motor 57. This produces a reflected beam 59 that is modulated in intensity in accordance with the recorded pattern of marks on the disc. The apparatus then detects the modulated beam and measures the lengths of the successive pulse-length modulated marks and spaces, to determine the corresponding 4-bit code blocks they represent. The original baseband video signal is thereafter reconstructed.

More particularly, the playback apparatus of FIG. 2 includes a detector 61 for detecting the modulated intensity of the reflected beam 59 and producing a corresponding electrical signal. This signal is coupled over line 63 to a MARK pulse-width demodulator 65 and a SPACE pulse-width demodulator 67, which measure the lengths of the successive marks and spaces, respectively, and determine the particular code blocks they represent. Each demodulator can conveniently include a linear ramp generator that is initiated and terminated by the detected edges of each mark (or space), along with an analog-to-digital converter for converting the peak value of the ramp to the corresponding four-bit code block. The apparatus further includes a decoder 69 for interleaving the successive four-bit code blocks supplied on lines 71 and 73 from the MARK and SPACE demodulators 65 and 67, respectively.

The sequence of code blocks is coupled over lines 75 from the decoder 69 to a buffer and deformatter device 77, which de-compresses the data using conventional techniques, converting it back to substantially its original digital format. Additionally, the deformatter inserts conventional digitized vertical and horizontal sync signals into the decompressed video data. The deformatter then produces a real-time digital video signal for coupling over lines 79 to a digital-to-analog converter 81, which reconstructs the original analog baseband video signal for output on line 83. The buffer and deformatter device 77 must include sufficient memory capacity to store a predetermined portion of the successive incoming code blocks, which are received from the decoder 69 at a variable rate determined by the particular information the codeblocks contain, while the information is being outputted in a substantially real-time fashion.

It will be appreciated from the foregoing description that the present invention provides an improved system for recording and playing back digital information on a disc-shaped record. The information is stored in a succession of spaced marks, with the lengths of both the marks and the spaces between successive marks being discretely variable in accordance with a succession of multi-bit code blocks. The digital information is thereby stored with an improved recording efficiency.

## Claims

1. A method for recording digital information on a record medium, the digital information being derived from a succession of binary bits, characterized in the grouping the binary bits into a succession of code blocks, each code block representing a prescribed number of binary bits; and recording the succession of code blocks on the record medium as a corresponding succession of alternating marks and spaces, the lengths of each of the successive marks and spaces being discretely variable in accordance with separate blocks in the succession of code blocks whereby the digital information is recorded on the record medium with high efficiency.

2. A method as defined in claim 1, characterized in that the code blocks formed in grouping the binary bits include each the same number of binary bits.

3. A system for recording digital information in the form of a succession of binary coded blocks each representing a prescribed number of binary bits, on a record medium in the form of a succession of spaced marks, the lengths of the successive marks being discretely modulated in accordance with first alternate ones of said blocks, characterized in that there are provided means for modulating the lengths of the spaces between the successive marks, in accordance with second alternate ones of said blocks, whereby each of the successive marks and spaces has a length representative of a separate code block and the digital information is recorded on the record medium with an increased efficiency.

4. Playback apparatus for recovering digital information stored on a record medium, the information being stored in a succession of spaced marks, each mark and each space between successive marks having a discretely-variable length representative of a separate binary code clock representing a prescribed number of binary bits, characterized by means for scanning the record medium to produce a playback signal that varies in accordance with the stored pattern of spaces and marks; and detection means responsive to the playback signal for detecting the lengths of the successive marks and spaces and for providing an output signal representative of the particular code block to which each corresponds.

5. A disc-shaped record medium for storing digital information in a succession of substantially circular and concentric recording tracks, wherein each recording track includes a succession of alternating marks and spaces, the lengths of the successive marks and spaces being modulated in accordance with the information to be recorded, characterized in that the digital information is derived from a succession of multi-bit binary code blocks converted to corresponding output pulses háving discretely-variable time durations, wherein the lengths of the successive marks and spaces are modulated in discrete steps in accordance with the discrete lengths of corresponding ones of said putput pulses.

6. A disc-shaped record medium as defined in Claim 5, wherein each code block of the digital information includes four binary bits, characterized in that each mark and each space between successive marks has one of sixteen possible discrete lengths, representative of the corresponding four-bit code block.

7. A disc-shaped record medium as defined in Claim 5, wherein each recording track stores a prescribed amount of digital information, characterized in that in case that less than an entire track is required to record the prescribed amount of information, the remainder of the track is occupied by alternating marks and spaces of predetermined lengths.

**Revendications**

1. Procédé pour l'enregistrement d'une information numérique sur un support d'enregistrement, l'information numérique étant dérivée d'une succession de bits, caractérisé par le groupement des bits en une succession de blocs codés, chaque bloc codé représentant un nombre prescrit de bits; et l'enregistrement de la succession des blocs codés sur le support d'enregistrement sous une forme d'une succession correspondante de marques et espaces alternés, les longueurs de chacun des marques et espaces successifs étant variables de manière distincte selon des blocs séparés dans la succession des blocs codés, ainsi l'information numérique est enregistrée sur le support d'enregistrement à une haute efficacité.

2. Procédé selon la revendication 1 caractérisé en ce que les blocs codés formés en groupant les bits comprennent chacun le même nombre de bits.

3. Système pour l'enregistrement d'une information numérique sous la forme d'une succession de blocs codés binaires, chacun représentant un nombre prescrit de bits, sur un support d'enregistrement sous la forme d'une succession de marques espacées, les longueurs des marques successives étant modulées de manière distincte selon une première quantité des blocs, caractérisé en ce qu'on prévoit un moyen pour moduler les longueurs des espaces entre les marques successives, selon des seconds blocs, chacun des marques et espaces successifs ayant une longueur représentative d'un bloc codé séparé et l'information numérique est enregistrée sur le support d'enregistrement à une efficacité accrue.

4. Dispositif de restitution de l'information numérique stockée sur un support d'enregistrement l'information étant stockée dans une succession de marques espacées, chaque marque et chaque espace entre les marques successives ayant une longueur variable de manière distincte représentative d'une bloc codé binaire séparé représentant un nombre prescrit des bits, caractérisé par un moyen pour explorer le support d'enregistrement pour produire un signal de restitution qui varie selon le motif stocké d'espaces et de marques; et un moyen de détection répondant au signal de restitution pour détecter les longueurs des marques et des espaces successifs et pour produire un signal de sortie représentatif du bloc codé particulier auquel chacun correspond.

5. Support d'enregistrement en forme de disque pour stocker une information numérique dans une succession de pistes sensiblement circulaires et concentriques d'enregistrement, ou chaque piste d'enregistrement comprend une succession de marques et d'espaces alternés, les longueurs des marques at espaces successifs étant modulés selon l'information à enregistrer, caractérisé en ce que l'information numérique est dérivée d'une succession de blocs codés binaires multi-bits convertis en impulsion correspondante de sortie ayant des durées variables de manière distincte dans le temps, les longueurs des marques et espaces successifs étant modulées par étapes distinctes selon les longueurs distinctes des impulsions correspondantes de sortie.

6. Support d'enregistrement en forme de disque selon la revendication 5 où chaque bloc codé de l'information numérique comprend quatre bits, caractérisé en ce que chaque marque et chaque espace entre des marques successives a l'une parmi seize longueurs distinctes possibles, représentatives du bloc codé à quatre bits correspondants.

7. Support d'enregistrement en forme de disque selon la revendication 5 où dans chaque piste d'enregistrement est stockée une quantité prescrite de l'information numérique, caractérisé en ce que dans le cas où il faut moins d'une piste entière pour enregistrer la quantité prescrite de l'information, le restant de la piste est occupé par des marques et espaces alternés de longueurs prédéterminées.

**Patentansprüche**

1. Verfahren zum Aufzeichnen digitaler Information auf einem Aufzeichnungsmedium, wobei die digitale Information aus einer Folge von binären Bits abgeleitet wird, dadurch gekennzeichnet,

daß die binären Bits in eine Folge von Codeblöcken gruppiert werden, wobei jeder Codeblock eine bestimmte Anzahl von binären Bits darstellt, und daß die Folge von Codeblöcken auf einem Aufzeichnungsmedium als eine entsprechende Folge von abwechselnden Zeichen und Pausen aufgezeichnet wird, wobei die Längen jeder der aufeinanderfolgenden Zeichen und Pausen schrittweise variabel ist, entsprechend den getrennten Blöcken in der Folge von Codeblöcken, so daß die digitale Information auf dem Aufzeichnungsmedium mit hohem Wirkungsgrad aufgezeichnet wird.

2. Verfahren nach Anspruch 1, dadurch gekennzeichnet, daß die bei der Gruppierung der binären Bits gebildeten Codeblöcke jeweils die gleiche Anzahl von binären Bits enthalten.

3. System zur Aufzeichnung digitaler Information in Form einer Folge von binären codierten Blöcken, die jeweils eine bestimmte Anzahl von binären Bits darstellen, auf einem Aufzeichnungsmedium in Form einer Folge von Zeichen mit gegenseitigem Abstand, wobei die Längen der aufeinanderfolgenden Zeichen schrittweise moduliert werden, entsprechend ersten abwechselnden Blöcken, dadurch gekennzeichnet,

daß Vorrichtungen vorgesehen sind, mit denen die Längen der Abstände (Pausen) zwischen aufeinanderfolgenden Zeichen gemäß zweiten abwechselnden Blöcken moduliert werden, so daß jeder der aufeinanderfolgenden Zeichen und Pausen eine Länge aufweist, die einen bestimmten Codeblock darstellt, und daß die digitale Information auf dem Aufzeichnungsmedium mit verbessertem Wirkungsgrad aufgezeichnet wird.

4. Wiedergabeeinrichtung zur Wiederherstellung digitaler, auf einem Aufzeichnungsmedium gespeicherter Information, wobei diese als Folge von Zeichen mit gegenseitigem Abstand (Pause) aufgezeichnet ist, und jedes Zeichen und jede Pause zwischen aufeinanderfolgenden Zeichen eine schrittweise variable Länge aufweist, die einen bestimmten binären Codeblock darstellt, der eine bestimmte Anzahl von binären Bits enthält, gekennzeichnet durch Vorrichtungen zur Abtastung des Aufzeichnungsmediums, um ein Wiedergabesignal zu erzeugen, das sich entsprechend dem aufgezeichneten Muster von Pausen und Zeichen ändert, und durch Detektionsvorrichtungen, die auf das Wiedergabesignal reagieren, um die Längen der aufeinanderfolgenden Zeichen und Pausen zu bestimmen und ein Ausgangssignal zu erzeugen, das den bestimmten Codeblock darstellt, welcher jeweils dargestellt wird.

5. Ein plattenförmiges Aufzeichnungsmedium zur Speicherung digitaler Information in einer Folge von im wesentlichn kreisförmigen und konzentrischen Aufzeichnungsspuren, wobei jede Aufzeichnungsspur eine Folge von abwechselnden Zeichen und Pausen enthält und die Längen der aufeinanderfolgenden Zeichen und Pausen entsprechend der aufzuzeichnenden Information moduliert sind, dadurch gekennzeichnet, daß die digitalen Information aus einer Folge von Multi-Bit Binärcodeblöcken abgeleitet wird, die zu entsprechenden Ausgangsimpulsen mit schrittweise variablen Zeitdauern umgesetzt wurden, wobei die Längen der aufeinanderfolgenden Zeichen und Pausen in diskreten Schritten entsprechend den diskreten Längen der entsprechenden Ausgangsimpulse moduliert sind.

6. Plattenförmiges Auszeichnungsmedium nach Anspruch 5, bei dem jeder Codeblock der digitalen Information vier binäre Bits enthält, dadurch gekennzeichnet, daß jedes Zeichen und jede Pause zwischen aufeinanderfolgenden Zeichen eine von sechzehn möglichen diskreten Längen aufweist, die den entsprechenden Vier-Bit-Codeblock darstellt.

7. Plattenförmiges Aufzeichnungsmedium nach Anspruch 5, bei dem jede Aufzeichnungsspur eine bestimmte Menge digitaler Information speichert, dadurch gekennzeichnet, daß für den Fall, daß weniger als eine ganze Spur zur Aufzeichnung der bestimmten Menge von Information erforderlich ist, der Rest der Spur durch abwechselnde Zeichen und Pausen bestimmter Längen gefüllt wird.

BASEBAND VIDEO SIGNAL
ANALOG-TO-DIGITAL CONVERTER
FORMATTER
BUFFER
MARK PULSE-WIDTH MODULATOR
COMBINER
ENABLE
ENABLE
SPACE PULSE-WIDTH MODULATOR
INTENSITY MODULATOR
WRITING LASER
Fig.1
VIDEO FRAME FORMAT
SECTOR 1
SECTOR 2
SECTOR N
SECTOR FORMAT
HEADER
DATA
FILLER
HEADER FORMAT
SECTOR SYNC.
ADDRESS
IDENTIFICATION
NORMAL/ COMPLEMENT
SPARES
DATA FORMAT
BOXEL 1
BOXEL 2
BOXEL 3
BOXEL M
SUPER MARKS
Fig.3

53
READING LASER
55
59
55,59
61
DETECTOR
63
MARK PULSE-WIDTH DEMODULATOR
65
67
SPACE PULSE-WIDTH DEMODULATOR
71
73
69
DECODER
75
51
57
77
BUFFER & DEFORMATTER
79
81
DIGITAL-TO-ANALOG CONVERTER
83
BASEBAND VIDEO SIGNAL

Fig.2

| CODE BLOCK | HEXADECIMAL EQUIVALENT | MARK (OR SPACE) LENGTH |
|---|---|---|
| 0000 | 0 | 1.0L |
| 0001 | 1 | 1.1L |
| 0010 | 2 | 1.2L |
| 0011 | 3 | 1.3L |
| 0100 | 4 | 1.4L |
| 0101 | 5 | 1.5L |
| 0110 | 6 | 1.6L |
| 0111 | 7 | 1.7L |
| 1000 | 8 | 1.8L |
| 1001 | 9 | 1.9L |
| 1010 | A | 2.0L |
| 1011 | B | 2.1L |
| 1100 | C | 2.2L |
| 1101 | D | 2.3L |
| 1110 | E | 2.4L |
| 1111 | F | 2.5L |

Fig.4